# EUROPEAN PATENT SPECIFICATION

(11) **EP 0 936 875 B1**
(45) Date of publication and mention of the grant of the patent: **25.06.2003**
(21) Application number: 97943792.8
(22) Date of filing: 13.10.1997
(51) Int. Cl.: A23J 3/34, A23L 1/23, A23L 1/227

(54) **METHOD OF PRODUCING A FOOD FLAVORING AGENT**
VERFAHREN ZUR HERSTELLUNG EINES GEWÜRZMITTELS FÜR NAHRUNGSMITTEL
PROCEDE DE PREPARATION D'UN AGENT AROMATISANT ALIMENTAIRE

(30) Priority: 30.10.1996 DK 120896
(43) Date of publication of application: 25.08.1999
(73) Proprietor: Novozymes A/S, 2880 Bagsvaerd (DK)
(72) Inventor: KOFOED, Lene Venke, DK-2880 Bagsvaerd (DK); FISCHER, Morten, DK-1720 Copenhagen V. (DK); NIELSEN, Per Munk, DK-2880 Bagsvaerd (DK); POMMER, Klaus, DK-2880 Bagsvaerd (DK)
(86) International application number: DK9700443
(87) International publication number: WO98018342

(56) References cited:
- WO-A-94/25580
- WO-A-96/13988
- US-A- 5 100 679
- US-A- 5 141 757

## Description

### TECHNICAL FIELD

This invention relates to the production of a food flavoring agent in a process that involves treating plant protein with a protease to hydrolyze at least 25% of the peptide bonds, i.e. a degree of hydrolysis (DH) above 25%.

### BACKGROUND ART

Plant protein hydrolysates are commonly used as food flavoring agents. Thus, WO 94/25580 and K. Pommer, Cereal Foods World, 745 (1995) describe the hydrolysis of plant protein with a fungal protease preparation containing five or more proteolytic enzyme components, to produce a flavoring agent with a high degree of hydrolysis.

The prior art has suggested various ways of modifying or improving the flavor of plant protein hydrolysates. Thus, US 3,689,277 (to Bio-Technical Resources) and JP-A 52-41274 (Kikkoman) describe processes for modifying the flavor of a protein hydrolyzate by adding a sugar (mono- or disaccharide) and heating.

The prior art also describes the treatment of plant material with proteases for various other purposes unrelated to food flavoring agents. Thus, JP-A 61-67469 (Japan Tobacco and Salt, Fuji Flavor) describes a process for improving tobacco flavor by treating it with enzymes and adding amino acids. Processes for producing proteinaceous products for use as functional protein or nutritional products with a low degree of hydrolysis (DH) have also been described, e.g. US 5,100,679.

It is the object "of this invention to provide an improved method of modifying the flavor of a food flavoring agent made by the hydrolysis of plant protein material with proteases without the need for adding bulk ingredients such as sugars.

### STATEMENT OF THE INVENTION

Surprisingly, we have found that the flavor of a plant protein hydrolysate can be intensified and modified by using a plant protein material which also contains carbohydrate and by including a treatment with carbohydrase, followed by a final maturation by heating. We have also found that different carbohydrases give different flavor notes, e.g. a roasted character, a smoked and pork like note, or a vegetable flavor note. Thus, we have found that by careful selection of the carbohydrase or carbohydrase combination for hydrolysis of the carbohydrates, different flavor characteristics can be induced in the protein hydrolysate.

The inventors presently believe that this flavor development is to a large degree caused by Maillard reactions between the hydrolyzed protein and the hydrolyzed carbohydrate, particularly monosaccharides. Different flavor characteristics are ascribed to the various monosaccharides formed by the use of different carbohydrases.

Accordingly, the invention provides a process for producing a food flavoring agent, comprising the steps of:
a) preparing an aqueous slurry comprising 1-40% by weight of plant protein and plant carbohydrate,
b) treating the slurry with a protease so as to hydrolyze at least 25% of peptide bonds in the protein,
c) treating the slurry with a carbohydrase to partially hydrolyze the carbohydrate before, during or after step b), and
d) maturation after steps b) and c) at 80-100°C for 2 - 12 hours, at 100-120°C for 1-4 hours or at 120-140°C for 15 minutes - 2 hours.

### DETAILED DESCRIPTION OF THE INVENTION

### Plant protein and plant carbohydrate

Plant protein and plant carbohydrate from two separate sources can be used, but most conveniently a plant material containing both protein and carbohydrate is used.

The carbohydrate can be a polysaccharide or an oligosaccharide. Thus, it may be a soluble or insoluble storage polysaccharide such as starch, inulin or galactomannan, or it may be an insoluble cell wall polysaccharide such as cellulose, hemicellulose or pectic substances. The hemicellulose may include xylan, arabinoxylan, xyloglucan, mannan and β(beta)-1,3-and/or β(beta)-1,4-glucan. The pectic substance may include homogalacturonan, rhamnogalacturonan and xylogalacturonan, and it may include side chains such as arabinan, galactan and arabinogalactan. Examples of oligosaccharides commonly present in plant material are stachyose, raffinose, melibiose and sucrose.

The plant material may be derived from seeds of a legume, a grain or a vegetable, e.g. soy beans, lupine, alfalfa, peas, faba bean, cotton seed, sesame seed, rape seed, maize (corn), wheat, oats, barley, rye, buckwheat, tomato or carrot. It may comprise whole soy beans, defatted soy beans, lupine seeds, rape seeds, whole wheat, wheat gluten, whole maize, maize gluten or a plant by-product such as potato pulp, tomato peel or sugar beet pulp.

### Preparation of slurry

Before preparing the slurry, the plant material may optionally be given a mechanical pre-treatment to reduce the particle size, e.g. grinding, or wet milling. Thus, the plant material may be used in the form of flakes, whole beans, whole grain, flour or meal.

Optionally, the plant material may be pre-treated by heating either in dry form or after preparing a slurry, e.g. by jet-cooking at 80-125°C for 20 minutes - 2 hours.

### Protease

Any protease or mixture of proteases that can give a degree of hydrolysis above 25% can be used. The protease or mixture of proteases can be selected according to principles well known in the art and may include both endo- and exo-peptidases (carboxy-peptidase and/or amino-peptidase).
The protease may be of animal, plant or microbial origin. An example of an animal protease is trypsin, e.g. bovine or porcine trypsin. Microbial proteases may be fungal or bacterial and may be derived from strains of the following genera and species: *Bacillus, B. licheniformis, B. subtilis* and *B. amylolique-faciens, Aspergillus, A. oryzae.* The bacterial protease may be a subtilisin, e.g. subtilisin Carlsberg, available under the trade name Alcalase®.

To achieve a high degree of hydrolysis, it may be preferable to use a mixture of proteases. One example is Flavourzyme™, a protease preparation derived from *A. oryzae* containing five or more proteolytic components, described in WO 94/25580. Also, a fungal protease preparation (such as Flavourzyme) may be used together with a bacterial protease (such as Alcalase).

### Carbohydrase

The carbohydrase to be used in the invention is an enzyme classified in EC 3.2.1.- (glycosidases hydrolyzing O-glycosyl compounds) according to Enzyme Nomenclature. Some examples of carbohydrases are: starch degrading enzymes such as α(alpha)-amylase, β(beta)-amylase, glucoamylase; hemi-cellulases such as arabinanase, arabinofuranosidase, xylanase, 1,3- or 1,4-β(beta)-xylosidase, β(beta)-1,4-galactanase, α(alpha)-galactosidase, β(beta)-galactosidase, mannanase; cellulases such as cellobiohydrolase, endo-glucanase; pectinases such as rhamnogalacturonase, rhamnopyranohydrolase, polygalacturonase, glucuronisidase); and other enzymes that hydrolyze plant carbohydrates such as β(beta)-glucanase and β-glucosidase.

The carbohydrase should be selected so as to act on a carbohydrate present in the plant material. The carbohydrase may be a purified, mono-component enzyme, or it may be a mixture of several different enzymes. With some complex plant carbohydrates or mixtures of carbohydrates it may be preferred to use a mixture of enzymes. In addition to the above enzymes, the mixture may also include other enzymes that assist in degrading the carbohydrate, such as pectin lyase or a pectin esterase (e.g. pectin methyl esterase, rhamnogalacturonan acetyl esterase, xylan acetyl esterase).

Some examples of specific carbohydrases follow:
β(beta)-1,4-galactanase from *Aspergillus aculeatus* (S. Christgau et al., Curr. Genet., 1995, vol. 27, 135-141), an enzyme that liberates galactose (a hexose) and galactooligomers.
Viscozyme™ (product of Novo Nordisk A/S), a multi-enzyme complex derived from a strain of *Aspergillus sp.,* containing a wide range of carbohydrases, including cellulase, β(beta)-glucanase and various types of hemi-cellulase such as arabinanase and xylanase. It also has activity against the branched pectic-like substances found in soy bean cell walls.
Mono-component carbohydrases derived from a strain of *Aspergillus aculeatus* according to L.V. Kofod et al., Carbohydrate Bioengineering, vol. 10, 1995, pp. 321-342: Xylanases (denoted Xyl I, Xyl II and Xyl III), rhamnogalacturonase, rhamnogalacturonan acetyl esterase, galactanase, arabinanase and α(alpha)-arabinofuranosidase.
Ultraflo™ (product of Novo Nordisk A/S), a multi-active b-glucanase preparation produced by a selected strain of *Humicola insolens* in which the dominant activities are cellulase, xylanase, pentosanase and arabanase.

The slurry of plant material to be treated will often contain a mixture of different carbohydrates which can act as substrates for different carbohydrases giving different flavor notes. Thus, the use of galactanase which liberates galactose and/or galactooligomers induces a roasted character to the hydrolyzate, whereas the use of arabinofuranosidase which liberates arabinose induces a smoked character. The use of a multi-enzyme complex which liberates uronic acids, xylose, rhamnose, fucose and glucose in addition to arabinose and galactose, further adds to a vegetable flavor note.

### Enzymatic treatment

The treatments with protease and carbohydrase may be carried out as a single step with all enzymes acting at the same time, or it may be performed in sequential steps with enzyme addition, and optionally also with adjustment of pH and temperature between the steps. Such a sequential treatment may be chosen, e.g. if the enzymes used have different requirements for pH and temperature.

The process conditions may be chosen to suit the selected enzymes according to principles well known in the art. Typical conditions will be in the ranges pH 4-9, 30-60°C for 1-24 hours in a slurry containing 1-40 % dry matter by weight (preferably 2-20%). Slow stirring may be used during the reaction.

The enzymatic treatment is conducted so as to hydrolyze at least 25% of the total peptide bonds in the protein (both dissolved protein and protein in the sediment), i.e. a degree of hydrolysis (DH) of at least 25% for the protein. It may be preferred to achieve a fairly high DH in order to develop the flavor, or it may be preferred to keep the DH value lower for better process economy. Thus, the DH will typically be in the range 30-90%, particularly 35-80%. The protease dosage will usually include an exo-protease in an amount of 5-100 LAPU/g protein, particularly 10-50 LAPU/g protein and an endo-protease in an amount of 0.001-0.05 AU/g protein. (LAPU and AU are units of protease activity, defined below). The protein hydrolysis and the measurement of DH may be done as described in J. Adler-Nissen, J. Agric. Food Chem., 27 (6), 1256-1262 (1979); J. Adler-Nissen, "Enzymic Hydrolysis of Food Proteins", Elsevier, London and New York (1986), ISBN 0-85334-386-1; K. Pommer, Cereal Foods World, 745 (1995).

The hydrolysis of the carbohydrate should, in general, achieve an increase in concentration of monosaccharide or reducing sugar (as glucose) of 0.1 - 20 g per 100 g dry matter. HPLC (High-Performance Liquid Chromatography) is conveniently used to determine the amount of monosaccharide. Typical dosages of carbohydrase are in the range of 5-1000 ppm of enzyme protein in relation to total dry matter, particularly 10-200 ppm.

### Protease assay methods (LAPU and AU)

1 Leucine Amino Peptidase Unit (LAPU) is the amount of enzyme which decomposes 1 µ(micro)M substrate per minute at the following conditions: 26 mM of L-leucine-p-nitroanilide as substrate, 0.1 M Tris buffer (pH 8.0), 40°C, 10 minutes reaction time.

The Anson Unit (AU) is defined in Journal of General Physiology, 22, 79-89 (1959).

### Maturation

The maturation is carried out in order to develop the flavor by holding at 80-140°C, usually for 15 minutes - 12 hours. The shortest times correspond to the highest temperature and vice versa. Thus, the maturation can be done at 80-100°C for 2-12 hours, at 100-120°C for 1 - 4 hours, or at 120-140°C for 15 minutes - 2 hours. For optimum flavor development, the pH during maturation is preferably in the range 4-7 (particularly 4.5-6). Thus, if needed, the pH may be adjusted prior to the maturation.

In a preferred embodiment, no separation of solids is done before the maturation step. Advantageously, it has been found that the presence of the insoluble plant material (sediment) during the maturation step improves the flavor of the final product.

### Optional process steps

Optionally, the slurry after the enzyme treatment (or the solution after separation) may be concentrated before the maturation, e.g. by evaporation (optionally under vacuum) to achieve a concentration of dry matter of 20-40%.

Also optionally, solids may be separated from the slurry after the completion of the enzyme treatment to obtain a hydrolyzate solution. For reasons described above, this separation is preferably done after the maturation. Such separation, if desired, can be done by conventional means such as filtration, ultra-filtration or centrifugation.

### Use of food flavoring agent

The flavoring agent of the invention may be used in the same manner as conventional Hydrolyzed Vegetable Protein (HVP) for imparting flavor to a wide range of food products such as soup and sauces.

### EXAMPLES

### Example 1

### Flavor of heat treated protein hydrolysates with and without carbohydrase.

### Hydrolysis process description

An enzyme hydrolyzate was made in Pilot Plant scale with high DH according to the following procedure.

33 kg of defatted untoasted soy grits were mixed thoroughly with 200 l of tap water and heated for 5 min at 85°C. The mixture was cooled to room temperature and pH adjusted to 7.

5 g of Flavourzyme (850 LAPU/g)/100g protein and 1 g of Alcalase (2.4 AU/g)/100g protein was added to the reaction mixture. Hydrolysis proceeded for 5 hours at 50°C, after which 1 % of NaCl was added and pH adjusted to 5 with 4N HCl. Additional 2.5 g of Flavourzyme (850 LAPU/g)/100 g of protein were added and hydrolysis continued for 20 hours at 50°C. Enzymes were inactivated for 5 min at 85°C.

The resulting hydrolysate contained 13% of dry matter of which approximately 55% was soluble. The protein content was 8% of which 85% was soluble and the carbohydrate content was approximately 2.5%. The carbohydrate pool contained both soluble mono- and oligosaccharides (stachyose and raffinose) and insoluble cell wall material (mainly pectic substances with a high content of arabinogalactan). Tne Degree of Hydrolysis (DH) of the protein was 60%.

### Degradation of polymeric sugars

The soy protein hydrolyzate described above was treated with the following carbchydrase preparations (alone and in combination) to hydrolyze insoluble cell wall polysaccharides: Viscozyme® L (Novo Nordisk), a multi-carbohydrase product, and β(beta)-1,4-galactanase, arabinanase and α(alpha)-arabino-furanosidase from *Aspergillus aculeatus*.

2 litres of hydrolyzate was adjusted to 40°C in a water bath and the pH adjusted to 5. Enzyme was added and reaction took place for 4 h. Enzymes were inactivated by heating for 5 min at 85°C. Dosages of the enzymes were: Viscozyme 1% of dry matter (2.6 g to 260 g of DM), galactanase 0.006% of DM, α(alpha)-arabinofuranosidase 0.006% of DM, and arabinanase 0.006% of DM.

### Maturation (heat treatment) for flavor development

The flavor in the carbohydrase treated hydrolysates was developed in a heat treatment step, allowing for Maillard reactions to occur.

The flavor characteristics developed after 1 hour at 125°C at pH 5 were judged by a panel test as follows. A blank sample not subjected to carbohydrase treatment was included in the experiment.

| Sample No. | Enzyme(s) | Flavor note |
|---|---|---|
| 1 | Blank | meat and vegetables |
| 2 | Viscozyme | roasted meat, smoked, vegetables |
| 3 | Galactanase | roasted meat, smoked |
| 4 | α(alpha) - arabinofuranosidase | smoked pork |
| 5 | Galactanase + α(alpha) - arabinofuranosidase | roasted meat, smoked (more intense than 3 and 4) |
| 6 | Arabinanase + α(alpha) - arabinofuranosidase | smoked pork (more sweet than 4) |

It is evident from the above that there is an obvious difference in flavor due to carbohydrase treatment. Hydrolysates which have received heat treatment after carbohydrase degradation are different from the blank and the different carbohydrases give different flavor notes. Liberated galactose and/or galactooligomers induce a roasted character to the hydrolyzate, whereas liberated arabinose induces a smoked character. The multi-enzyme complex which liberates xylose, rhamnose, fucose and glucose in addition to arabinose and galactose, further adds a vegetable flavor note.

### Example 2

### Enzymatically Hydrolyzed Soy Protein

The process consisted of 4 steps, i.e. pre-treatment, hydrolysis, maturation and post-treatment (separation, concentrating and spray drying).

### Pre-treatment

50 kg of soy flake was mixed with 200 - 300 kg of water and pre-cooked directly. The pre-cooking was carried out at 95°C for 60 minutes. The final weight was adjusted to 250-350 kg, and the mixture was cooled.

### Hydrolysis

The hydrolysis was carried out at 55°C and natural pH. 0.125 kg of Alcalase 2.4 L and 0.375 kg of Flavourzyme 1,000 L were added at the start.

The hydrolysis was carried out for 3-4 hours. After 3-4 hours the pH was reduced to 5.0 - 5.5 and 0.375 kg of Flavourzyme 1000 L and 0.100 kg of Viscozyme were added. The hydrolysis was continued over night, totally 16-20 hours.

### Maturation

The hydrolysis was followed by cooking for 4 hours at 95°C with sediment present.

### Post-treatment

The hydrolysate was separated either in Ultra Filtration at 60°C, or by simple filtration dual plate and frame filter. Celite was used as filter aid. The permeate was Nano filtered at 60°C until a concentration of 30-35 Brix.

The concentrate was matured at 90°C for 4 hours for further flavor enhancement before the eventual formulation to a final composition. Spray drying was carried out using an inlet temperature of approx. 180°C and an outlet temperature of approx. 80°C.

The taste of the treated hydrolysate had no beany flavor.

## Claims

1. A process for producing a food flavoring agent, comprising the steps of:
a) preparing an aqueous slurry comprising 1-40 % by weight of plant protein and plant carbohydrate,
b) treating the slurry with a protease so as to hydrolyze at least 25% of peptide bonds in the protein,
c) treating the slurry with a carbohydrase to partially hydrolyze the carbohydrate before, during or after step b), and
d) maturation after steps b) and c) at 80-100°C for 2-12 hours, at 100-120°C for 1-4 hours or at 120-140°C for 15 minutes - 2 hours.

2. The process of claim 1 wherein the plant protein and the plant carbohydrate are provided by a plant material comprising seeds of a legume, preferably soy beans, most preferably defatted soy beans, particularly in the form of flakes or meal.

3. The process of either of the preceding claims further comprising cooking the slurry at 80-125°C for 20 minutes - 2 hours prior to the protease treatment.

4. The process of any of the preceding claims wherein the protease comprises a bacterial or fungal protease, preferably derived from a strain of *Bacillus* or *Aspergillus,* most preferably *B. licheniformis* or *A. oryzae.*

5. The process of any of the preceding claims comprising a treatment with both a *Bacillus* protease and an *Aspergillus* protease, preferably with intermediate lowering of the pH and re-dosing of the protease.

6. The process of any of the preceding claims wherein the carbohydrase is selected from the group consisting of arabinanase, xylanase, galactanase, α(alpha)-arabinofuranosidase, β(beta)-amylase, 1,3- or 1,4-β(beta)-xylosidase, β(beta)-1,4-galactanase, α(alpha)-galactosidase, β(beta)-galactosidase, mannanase, cellobiohydrolase, hemi-cellulase, rhamnogalacturonase, rhamnopyranohydrolase, polygalacturonase, glucuronisidase, β(beta)-glucanase and β-glucosidase; and combinations of any of these enzymes.

7. The process of any of the preceding claims wherein the carbohydrase is selected from the group consisting of β(beta-glucanase) or hemicellulase, preferably arabinanase, xylanase, galactanase, or α(alpha)-arabinofuranosidase; and combinations of any of these enzymes.

8. The process of any of the preceding claims wherein the carbohydrase is selected from the group consiting of arabinanase, xylanase, galactanase or α(alpha)-arabinofuranosidase; and combinations of any of these enzymes.

9. The process of any of the preceding claims wherein the carbohydrase is derived from a strain of *Aspergillus,* preferably *A. aculeatus*.

10. The process of any of the preceding claims wherein the maturation is conducted at pH 4-7, preferably 4.5-6.

11. The process of any of the preceding claims wherein the maturation is conducted at 100-120°C for 1-4 hours or at 120-140°C for 15 minutes - 2 hours.

12. The process of any of the preceding claims wherein no separation of solids is done before the maturation step.

13. The process of any of the preceding claims further comprising separation of solids after the maturation, preferably by ultra-filtration, filtration, and/or spray drying.

## Patentansprüche

1. Verfahren zur Herstellung eines Nahrungsmittelgeschmacksmittels umfassend die Schritte:
a) Zubereitung eines wässrigen Breis enthaltend 1 - 40 Gew.-% Pflanzenprotein und Pflanzenkohlenhydrat,
b) Behandlung des Breis mit einer Protease, so dass mindestens 25 % der Peptidbindungen in dem Protein hydrolysiert werden,
c) Behandlung des Breis mit einer Carbohydrase zur teilweisen Hydrolyse vor, während oder nach Schritt b, und
d) Reifung nach den Schritten b) und c) bei 80 - 100°C für 2 - 12 Stunden, bei 100 - 120°C für 1 - 4 Stunden oder bei 120 - 140°C für 15 Minuten - 2 Stunden.

2. Verfahren nach Anspruch 1, wobei das Pflanzenprotein und das Pflanzenkohlenhydrat von einem Pflanzenmaterial bereitgestellt werden, umfassend Samen eines Gemüses, vorzugsweise Sojabohnen, am meisten bevorzugt entfettete Sojabohnen, insbesondere in der Form von Flocken oder Schrot.

3. Verfahren nach einem der vorangehenden Ansprüche, weiterhin umfassend Kochen des Breis bei 80 - 125°C für 20 Minuten - 2 Stunden vor der Proteasebehandlung.

4. Verfahren nach einem beliebigen der vorangehenden Ansprüche, wobei die Protease eine bakterielle oder fungöse Protease umfasst, vorzugsweise entstammend aus dem Stamm *Bacillus* oder *Aspergillus,* am meisten bevorzugt *B. licheniformis* oder *A. oryzae.*

5. Verfahren nach einem beliebigen der vorangehenden Ansprüche, umfassend eine Behandlung mit beiden, einer *Bacillus-*Protease und einer *Aspergillus*-Protease, vorzugsweise mit dazwischenliegendem Absenken des pH und erneuter Dosierung der Protease.

6. Verfahren nach einem beliebigen der vorangehenden Ansprüche, wobei die Carbohydrase ausgewählt ist aus der Gruppe bestehend aus Arabinase, Xylanase, Galaktanase, α(alpha)-Arabinofuranosidase, β(beta)-Amylase, 1,3-oder 1,4-β(beta)-Xylosidase, β(beta)-1,4-Galaktanase, α(alpha)-Galaktosidase, β(beta)-Galaktosidase, Mannanase, Zellobiohydrolase, Hemizellulase, Rhamnogalakturonase, Rhamnopyranohydrolase, Polygalakturonase, Glucuronisidase, β(beta)-Glukanase und β-Glukosidase; und Kombinationen von beliebigen dieser Enzymen.

7. Verfahren nach einem beliebigen der vorangehenden Ansprüche, wobei die Carbohydrase ausgewählt ist aus der Gruppe bestehend aus β(beta)-Glukanase oder Hemizellulase, bevorzugt Arabinase, Xylanase, Galaktanase oder α(alpha)-Arabinofüranosidase; und Kombinationen von beliebigen dieser Enzyme.

8. Verfahren nach einem beliebigen der vorangehenden Ansprüche, wobei die Carbohydrase ausgewählt ist aus der Gruppe bestehend aus Arabinanase, Xylanase, Galaktanase oder α(alpha)-Arabinofuranosidase; und Kombinationen beliebiger dieser Enzyme.

9. Verfahren nach einem beliebigen der vorangehenden Ansprüche, wobei die Carbohydrase von einem Stamm von *Aspergillus* entstammt, vorzugsweise *A. aculeatus*.

10. Verfahren nach einem beliebigen der vorangehenden Ansprüche, wobei die Reifung bei pH 4 - 7, vorzugsweise 4,5 - 6 durchgeführt wird.

11. Verfahren nach einem beliebigen der vorangehenden Ansprüche, wobei die Reifung bei 100-120°C für 1 - 4 Stunden oder bei 120 - 140°C für 15 Minuten - 2 Stunden durchgeführt wird.

12. Verfahren nach einem beliebigen der vorangehenden Ansprüche, wobei keine Trennung der Feststoffe vor dem Reifungsschritt ausgeführt wird.

13. Verfahren nach einem beliebigen der vorangehenden Ansprüche, weiterhin umfassend Abtrennung der Feststoffe nach der Reifung, vorzugsweise mittels Ultra-Filtration, Filtration und/oder Sprühtrocknung.

## Revendications

1. Procédé de préparation d'un agent aromatisant alimentaire, comprenant les étapes de :
a) préparation d'une suspension aqueuse comprenant 1 à 40 % en poids de protéine végétale et d'hydrate de carbone végétal,
b) traitement de la suspension avec une protéase pour hydrolyser au moins 25% de liaisons peptidiques dans la protéine,
c) traitement de la suspension avec une carbohydrase pour hydrolyser partiellement l'hydrate de carbone avant, pendant ou après l'étape b), et
d) maturation après les étapes b) et c) à 80-100°C pendant 2 à 12 heures, à 100-120°C pendant 1 à 4 heures ou à 120-140°C pendant 15 minutes à 2 heures.

2. Procédé selon la revendication 1 dans lequel la protéine végétale et l'hydrate de carbone végétal sont fournis par un matériau végétal comprenant les graines d'une légumineuse, de préférence des graines de soja, de manière particulièrement préférée des graines de soja dégraissées, particulièrement sous forme de flocons ou de farine.

3. Procédé selon l'une ou l'autre des revendications précédentes comprenant en outre la cuisson de la suspension à 80-125°C pendant 20 minutes à 2 heures avant le traitement à la protéase.

4. Procédé selon l'une quelconque des revendications précédentes dans lequel la protéasé comprend une protéase bactérienne ou fongique, provenant de préférence d'une souche de *Bacillus* ou *d'Aspergillus,* de manière particulièrement préférée *B. licheniformis* ou *A.* oryzae.

5. Procédé selon l'une quelconque des revendications précédentes comprenant un traitement avec à la fois une protéase de *Bacillus* et une protéase d'*Aspergillus,* de préférence avec l'abaissement intermédiaire du pH et le redosage de la protéase.

6. Procédé selon l'une quelconque des revendications précédentes dans lequel la carbohydrase est choisie dans le groupe consistant en l'arabinanase, la xylanase, la galactanase, l'α(alpha)-arabinofuranosidase, la β(béta)-amylase, la 1,3- ou 1,4-β(béta)-xylosidase, la β(béta)-1,4-galactanase, l'α(alpha)-galactosidase, la β(béta)-galactosidase, la mannanase, la cellobiohydrolase, l'hémicellulase, la rhamnogalacturonase, la rhamnopyranohydrolase, la polygalacturonase, la glucuronisidase, la β(béta)-glucanase, et la β-glucosidase ; et les combinaisons de n'importe quelles de ces enzymes.

7. Procédé selon l'une quelconque des revendications précédentes dans lequel la carbohydrase est choisie dans le groupe consistant en la β(béta-glucanase) ou l'hémicellulase, de préférence l'arabinanase, la xylanase, la galactanase ou l'α(alpha)-arabinofuranosidase ; et des combinaisons de n'importe quelles de ces enzymes.

8. Procédé selon l'une quelconque des revendications précédentes dans lequel la carbohydrase est choisie dans le groupe consistant en l'arabinanase, la xylanase, la galactanase ou l'α(alpha)-arabinofuranosidase ; et des combinaisons de n'importe quelles de ces enzymes.

9. Procédé selon l'une quelconque des revendications précédentes dans lequel la carbohydrase est dérivée d'une souche d'*Aspergillus,* de préférence *A. aculeatus*.

10. Procédé selon l'une quelconque des revendications précédentes dans lequel la maturation est effectuée à pH 4 à 7, de préférence 4,5 à 6.

11. Procédé selon l'une quelconque des revendications précédentes dans lequel la maturation est effectuée à 100-120°C pendant 1 à 4 heures ou à 120-140°C pendant 15 minutes à 2 heures.

12. Procédé selon l'une quelconque des revendications précédentes dans lequel aucune séparation de solides n'est effectuée avant l'étape de maturation.

13. Procédé selon l'une quelconque des revendications précédentes comprenant en outre la séparation de solides après la maturation, de préférence par ultrafiltration, filtration, et/ou lyophilisation.
